# EUROPÄISCHE PATENTSCHRIFT

(11) **EP 3 000 572 B1**
(45) Veröffentlichungstag und Bekanntmachung des Hinweises auf die Patenterteilung: **14.02.2018**
(21) Anmeldenummer: 15190223.6
(22) Anmeldetag: 13.03.2008
(51) Int. Cl.: B29B 11/16, B29C 70/38, B29C 70/54

(54) **ELASTISCHER FASERLEGESTEMPEL**
ELASTIC FIBRE LAYING DIE
TAMPON ELASTIQUE D'APPLICATION DE FIBRES

(30) Priorität: 13.03.2007 DE 102007012609
(43) Veröffentlichungstag der Anmeldung: 30.03.2016
(62) Teilanmeldung aus: 08717792.9
(73) Patentinhaber: Airbus Defence and Space GmbH, 85521 Ottobrunn (DE)
(72) Erfinder: MEYER, Oliver, 80999 München (DE); SCHOPPE, Stephan, 65618 Selters/Ts (DE)
(74) Vertreter: Kastel, Stefan

(56) Entgegenhaltungen:
- EP-A- 0 392 974
- EP-A- 1 749 631
- WO-A-03/100148

## Beschreibung

Die Erfindung betrifft einen Legestempel zur Verwendung in einer Legevorrichtung zum Verlegen von Faserstücken sowie eine mit einem solchen Legestempel versehene Legevorrichtung. Die Legevorrichtung ist insbesondere geeignet zur Verwendung in einem Verfahren zum Herstellen einer Preform für eine kraftflussgerechte Faserverbundstruktur.

Beim Bau von Fahrzeugen aller Art, insbesondere beim Bau von Luft- und Raumfahrtgeräten, aber auch in anderen Industriezweigen, wie im Maschinenbau, gibt es immer mehr das Bedürfnis nach belastbaren und dennoch leichtgewichtigen und möglichst kostengünstigen Materialien. Insbesondere Faserverbundwerkstoffe bieten ein überragendes Leichtbaupotential. Das Prinzip besteht darin, dass insbesondere hochfeste und steife Fasern belastungsgerecht in einer Matrix eingebettet werden, wodurch Bauteile mit herausragenden mechanischen Eigenschaften entstehen, die mit bisherigen Techniken typischerweise 25% leichter als Aluminium und 50% leichter als Stahlstrukturen mit vergleichbarer Leistungsfähigkeit sind. Ein Nachteil liegt in den hohen Werkstoffkosten und insbesondere in der aufwändigen, größtenteils manuellen Fertigung.

Es gibt daher den Wunsch, eine automatisierte Herstellung zu schaffen, die eine maschinelle Anordnung der Fasern im Raum ermöglicht.

Um Faserverbundstrukturen mit entsprechend dem Kraftfluss angeordneten Fasern herzustellen, hat man für ausgewählte Anwendungen sogenannte Preforms als textile Halbzeuge gefertigt. Dabei handelt es sich um meist zwei- oder dreidimensionale Gebilde mit belastungsgerecht ausgelegter Faserausrichtung. Bisher werden hierzu mit Mitteln der Textiltechnik Endlosfasern in Belastungsrichtung verlegt und mit Mitteln der Textiltechnik, in der Regel durch Vernähen, Stricktechniken oder dergleichen, vorfixiert. Beispiele für Vorrichtungen und Verfahren zum Herstellen solcher Preforms finden sich in der DE 30 03 666 A1, der DE 196 24 912, der DE 197 26 831 A1 sowie der DE 100 05 202 A1.

Jedoch sind die bekannten Verfahren zum Herstellen von Preforms kompliziert in der Anwendung und der Prozesstechnik. Insbesondere bei solchen Bauteilen, wo gekrümmte Kraftflusslinien mit variierender Dichte zu erwarten sind, ist mit den bisher bekannten Methoden die Herstellung eines entsprechend kraftflussgerechten ausgelegten Bauteiles nicht möglich. Insbesondere können die Fasern nicht entlang definiert gekrümmter Bahnen orientiert werden, und der Fasergehalt lässt sich nicht lokal variieren.

Die EP 0 392 974 A2 befasst sich mit einer Vorrichtung zur maschinellen Aufbringung eines flexiblen, einseitig klebefähigen Schichtkörpers. Die Vorrichtung weist einen Vakuumgreifer mit einem Tampon aus einem weichelastischen Material auf, in dem mehrere Kanäle vorgesehen sind. Unterdruck wird über einen Hohlraum in einer Vakuumplatte auf die Kanäle zum Ansaugen des Schichtkörpers verteilt. Zum Schmelzen einer Klebeschicht an dem Schichtkörper wird der an dem Tampon festgelegt Schichtkörper einer externen Heizvorrichtung zugeführt.

Aufgabe der Erfindung ist es einen Legestempel zur Verwendung in einer bei einer Herstellung von textilen Halbzeugen für kraftflussgerecht ausgelegte Faserverbundstrukturen verwendbaren Vorrichtung, mit der die Fasern besser an komplizierte Kraftflussverläufe anpassbar sind, derart zu schaffen, dass Anlagekosten gesenkt werden können, als auch die Produktivität erhöht werden kann.

Diese Aufgabe wird mit einem Legestempel nach dem beigefügten Anspruch 1 gelöst.

Eine Legevorrichtung mit einem derartigen Legestempel ist Gegenstand des Nebenanspruches.

Vorteilhafte Ausgestaltungen der Erfindung sind Gegenstand der Unteransprüche.

Erfindungsgemäß ist ein Legestempel zur Verwendung in einer Legevorrichtung zum Verlegen von Faserstücken mit einer elastisch verformbaren Oberfläche zum flächigen Anpressen der Faserstücken an eine dreidimensionale Formfläche vorgesehen.

Eine solche Vorrichtung ermöglicht zum Beispiel die Verlegung von Faserstücken entlang beliebiger Flächengeometrien, zum Beispiel auch entlang dreidimensionale gekrümmter Flächengestaltungen.

Bei einem Herstellverfahren von textilen Halbzeugen, für die die Legevorrichtung vorteilhafterweise verwendbar ist, lässt sich eine Preform dadurch herstellen, dass zunächst ein Faserfilamentbündel, vorzugsweise ein Roving, flach aufgespreizt wird. Von diesem aufgespreizten Faserfilamentbündel wird dann ein Faserbandstück, in der folgenden Beschreibung auch Patch genannt, vorzugsweise mit vor-definierter Länge, abgeschnitten. Anschließend wird das Faserbandstück mittels einer Legevorrichtung aufgenommen und an einer vordefinierten Position platziert. Dort wird das Faserbandstück mittels eines Bindermaterials fixiert. Das Abschneiden, Verlegen und Fixieren von Faserbandstücken wird wiederholt, wobei die Faserbandstücke an unterschiedlichen vordefinierten Positionen platziert und fixiert werden. Dies erfolgt vorzugsweise derart, dass aus den mehreren aneinander und/oder an eventuelle weitere Bestandteile der Preform fixierten Patchen die gewünschte Preform mit entsprechend kraftflussgerechter Faserorientierung gebildet wird. Es lässt sich dadurch zum Beispiel auch ein Bereich einer konventionell hergestellten Preform gezielt verstärken, beispielsweise indem an besonders belasteten Stellen Patche kraftflussgerecht abgelegt werden.

Allgemein gesehen ermöglicht ein solches Verfahren, das auch Fiber-Patch-Preforming-Technologie genannt werden kann, durch einen speziellen Legeprozess das positionsgenaue Aufbringen kurzer Faserstücke (Patches). Über die Orientierung und Anzahl der Faserstücke können die geforderten Eigenschaften der Preform erfüllt werden.

Eine Orientierung von Faserstücken entlang komplizierter dreidimensional gekrümmter Flächen wird durch die erfindungsgemäße Legevorrichtung ermöglicht.

In bevorzugter Ausgestaltung ist die Legevorrichtung dazu geeignet, im Rahmen einer solchen Fiber-Patch-Preforming-technologie (FPP) bebinderte und in definierte Geometrien geschnittene Faserstücke (Patches) entsprechend eines Legeplans positionsgenau abzulegen. Ein hierzu vorgeschlagener Legestempel ist Teil der Legevorrichtung und kann in verschiedenen geometrischen Variationen, beispielsweise in Form eines Quaders oder in Rollenform usw. eingesetzt werden.

Vorzugsweise wird die elastisch verformbare Oberfläche an einem elastomeren Körper bereitgestellt. Insbesondere die flexible Oberfläche ist dabei weiter bevorzugt aus Silikon gebildet, einem Elastomer, das vielen Lastwechseln stand hält und gleichzeitig Trennfunktionen hat, was zum Transportieren behinderter Fasern und insbesondere zum Ablegen derselben vorteilhaft ist.

Die Oberflächenanpassung mittels eines elastomeren Körpers ähnelt der Tampon-Drucktechnik. Es ist allerdings keine ähnliche Verwendung in einer Legevorrichtung bekannt.

Bei einer vorteilhaften Verwendung der Legevorrichtung im Rahmen einer Herstellung von Preformen können insbesondere durch die Ablage gespreizter, kurz geschnittener Faserstücke kraftflussoptimierte Preformen hergestellt werden. Zum Beispiel schneidet ein Faserschneidwerk speziell vorgefertigte, bebinderte Faserbänder in kurze Stücke und übergibt diese an ein Vakuumfließband. Dort werden die Faserbandstücke vereinzelt und zu der Legevorrichtung transportiert. Die Übergabe der Faserbandstücke an einen Legekopf der Legevorrichtung erfolgt vorzugsweise fliegend über eine Kombination aus Ansaugmodulen und Abblasmodulen.

In bevorzugter Ausgestaltung ist die Legevorrichtung mit einer Aktivierungseinrichtung für das Bindermaterial versehen, beispielsweise ist eine Heizvorrichtung an dem Legekopf vorgesehen, die das Faserbandstück während des Transports zum Ablegeort aufheizt und dadurch einen Binder aktiviert. Der Legekopf presst das Faserbandstück auf die vordefinierte Stelle und löst sich dann vorzugsweise mit einem Abblasimpuls. Der Legekopf kehrt danach in Ausgangsposition zurück.

Um auch komplizierte dreidimensionale Gestaltungen ausbilden zu können, ist zum Beispiel vorgesehen, dass beim Platzieren das Faserbandstück auf einen Teilbereich einer Formfläche für die Preform gepresst wird.

Ein die flexible Oberfläche oder Pressfläche aufweisender Legekopf der Legevorrichtung wird vorzugsweise automatisch so gesteuert, dass er zwischen wenigstens einer oder mehreren Aufnahmepositionen, wo die Faserstücke, beispielsweise einzelne der vorerwähnten Faserbandstücke, aufgenommen werden und den jeweils vorbestimmten Positionen hin- und herbeweglich ist.

Um die Faserbandstücke lagegenau zu positionieren, ist es weiter bevorzugt, dass sie an der flexiblen Oberfläche festgehalten werden. Dies ist bevorzugt mit pneumatischen Kräften, insbesondere mittels Ansaugen und Abblasen, durchführbar. Das Festhalten mittels pneumatischem Ansaugen hat neben der oben erwähnten vereinfachten Aufnahme der Faserbandstücke den Vorteil, dass die Faserstück flach ohne Verwerfungen aufliegen können. Insbesondere bei einer flachen aufgespreizten Struktur eines zu verlegenden Faserbandstückes ist das Festhalten mittels Ansaugen auch problemlos möglich.

Wenn eine Positioniereinrichtung, mittels welcher die flexible Oberfläche zum Verlegen bewegt wird, auch eine Einrichtung zum Verdrehen oder Verschwenken der Oberfläche aufweist, lassen sich in einfacher Weise die Faserstücke mit zueinander unterschiedlichen Faserorientierungen verlegen. Dadurch ist eine Verlegung mit Faserorientierungen erreichbar, die auch stärker gekrümmten vorgegebenen Bahnen folgen können.

In bevorzugter Ausgestaltung ist die Legevorrichtung demnach in der Lage, Faserstücke, wie zum Beispiel Faserzuschnitte schnell und schonend aufzunehmen und an einem definierten Ablageort zu transportieren. Während des Transports aktiviert eine Aktivierungseinrichtung ein Bindermaterial zum Fixieren der Fasern. Beispielsweise heizt eine in die Kontaktfläche integrierte Heizung das Material auf und aktiviert dadurch ein Bindemittel auf dem Faserzuschnitt.

Am Ablageort wird das Faserstück auf eine Oberfläche beispielsweise einer Vorform gepresst, wo sich die flexible Oberfläche der Oberflächengeometrie anpasst.

Am Ablageort wird weiter die so angepresste Fasergruppe vorteilhafterweise mit einem Abblasimpuls gelöst. Dies kann gleichzeitig zur Kühlung des Bindermaterials beitragen. Das Bindematerial kühlt sich am Ablageort ab und wird fest, wodurch die Fasern fixiert werden. Das Fasermaterial verbleibt am Ablageort und der Legekopf kann wieder in die Aufnahmeposition zur Aufnahme des nächsten Faserstückes zurückfahren.

Ausführungsbeispiele der Erfindung werden nachfolgend anhand der dargestellten Zeichnungen näher erläutert. Darin zeigt:
**Fig. 1** eine schematische Übersichtsdarstellung über eine Vorrichtung zur Herstellung einer Preform zwecks Herstellung kraftflussgerechter Faserverbundstrukturen;
**Fig. 1a** eine schematische Darstellung einer alternativen Ausgestaltung der Vorrichtung von Fig. 1 an einer durch eine strichpunktierte Linie angedeuteten Trennebene;
**Fig. 2** eine schematische Darstellung einer bei der Vorrichtung gemäß Fig. 1 verwendbaren Abrollvorrichtung zum Abrollen eines in der Vorrichtung gemäß Fig. 1 verarbeitbaren Faserfilamentbündels;
**Fig. 3** eine schematische perspektivische Darstellung eines in der Abrollvorrichtung von Fig. 2 verwendbaren Positionssensors sowie ein Diagramm von dessen Kennlinie;
**Fig. 4** eine perspektivische Ansicht einer an sich bekannten Spreizvorrichtung zur Erläuterung des Wirkungsprinzips einer in der Vorrichtung gemäß Fig. 1 eingesetzten Spreizung eines Faserfilamentbündels;
**Fig. 5** eine perspektivische schematische Darstellung einer bei der Vorrichtung von

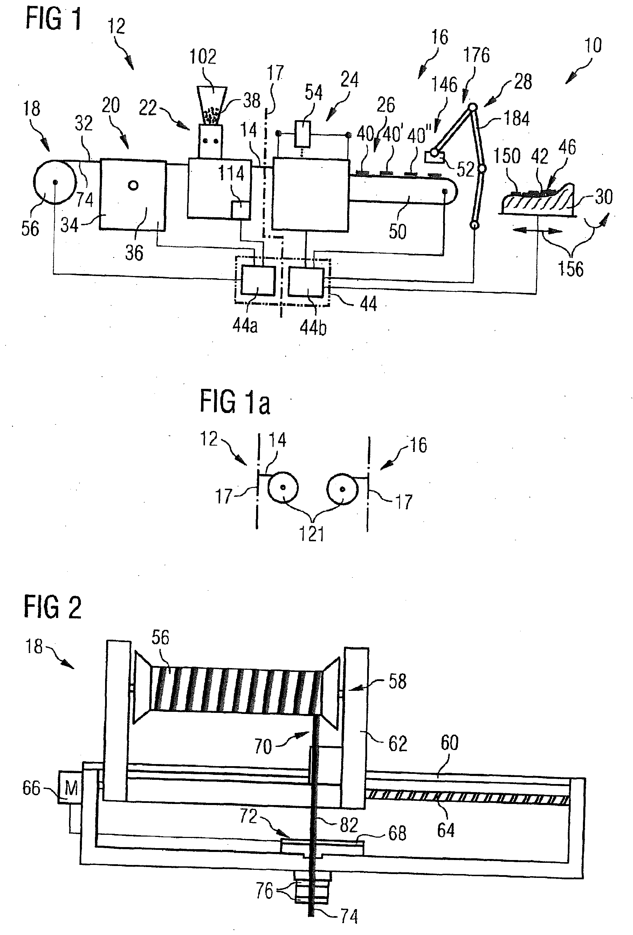

Fig. 1 verwendbaren Spreizeinrichtung;

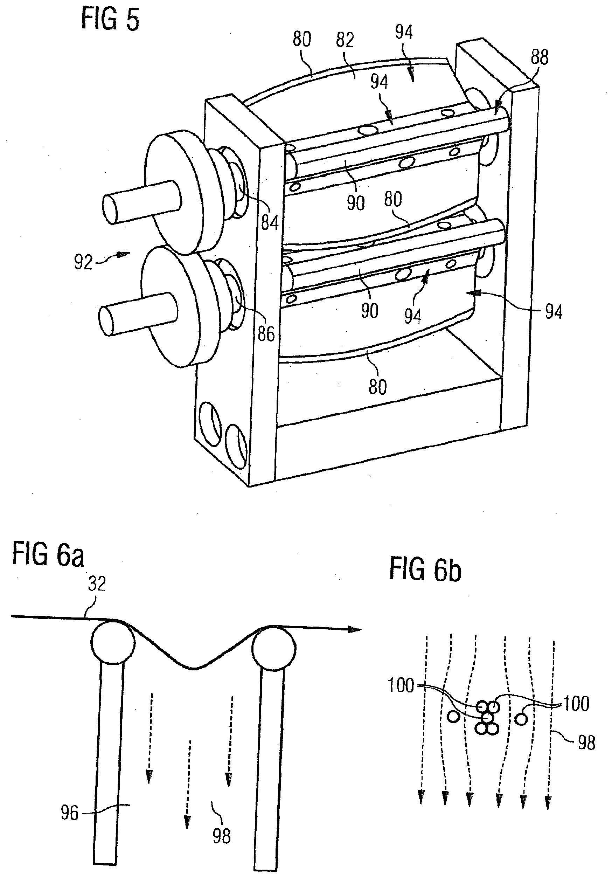

**Fig. 6a** eine schematische Seitenansicht einer bei der Vorrichtung von Fig. 1 verwendbaren Lockerungseinrichtung;
**Fig. 6b** eine schematische Darstellung des Wirkungsprinzips der Lockerungseinrichtung von Fig. 6a;

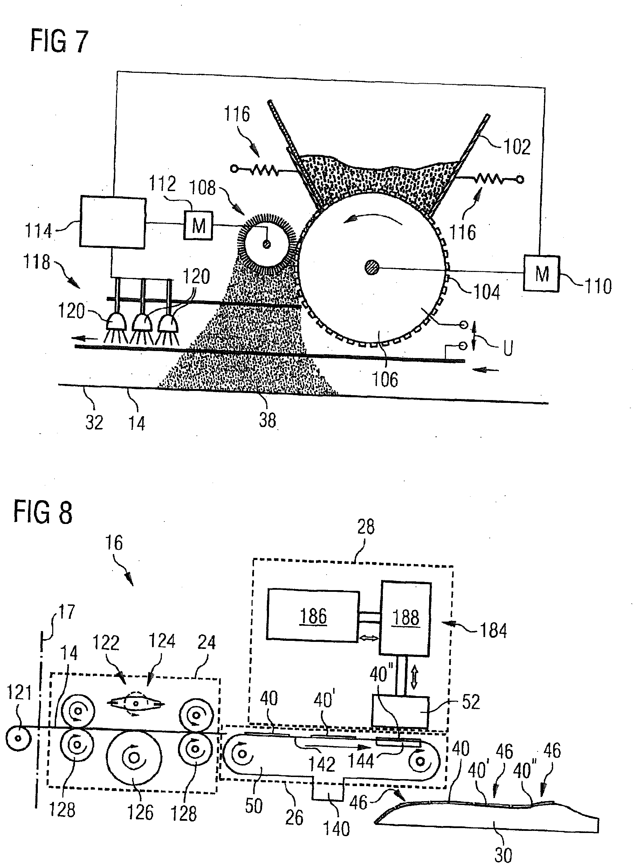

**Fig. 7** eine schematische Seitenansicht einer bei der Vorrichtung von Fig. 1 verwendbaren Bebinderungseinrichtung;
**Fig. 8** eine schematische Seitenansicht von bei einer Ausführungsform einer Vorrichtung zur Herstellung einer Preform eingesetzten Kombination aus Schneidvorrichtung und Legevorrichtung;

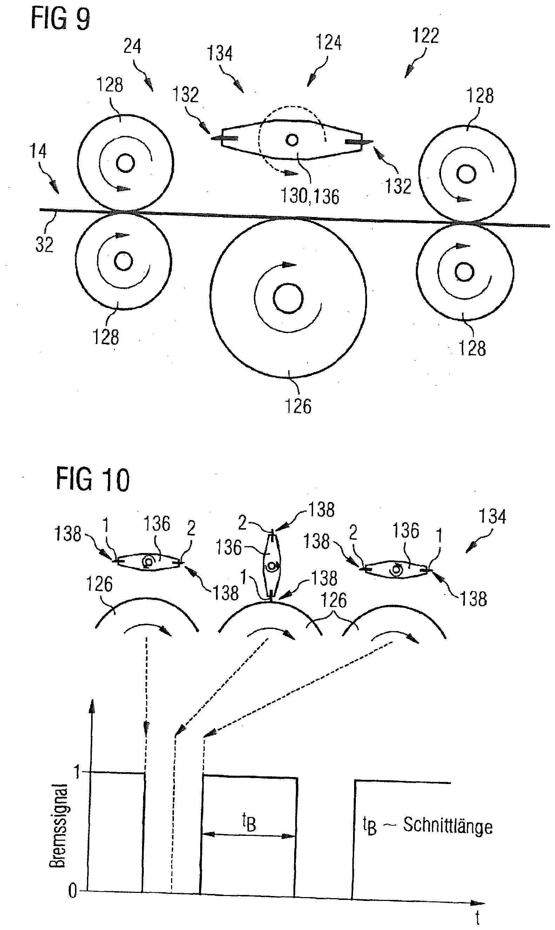

**Fig. 9/10** schematische Darstellungen des Wirkungsprinzips der Schneidvorrichtung von Fig. 8;

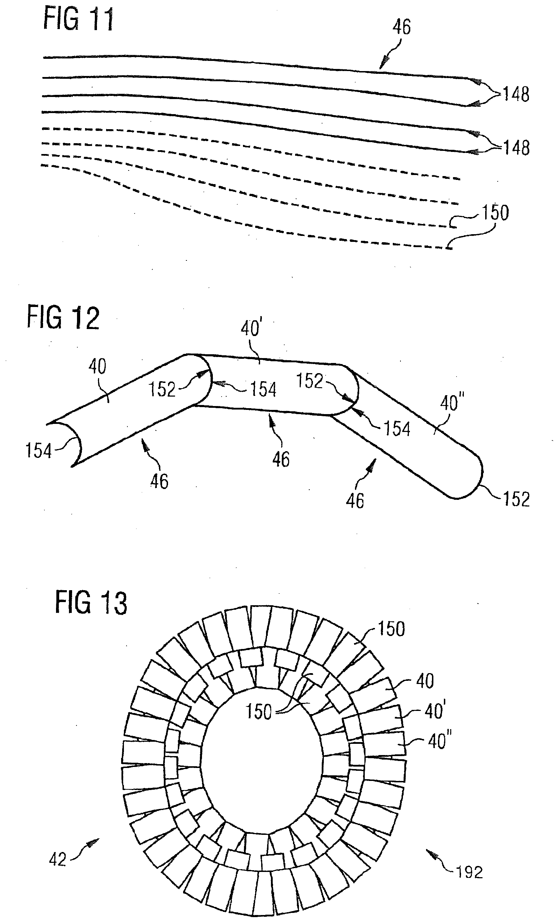

**Fig. 11** eine schematische Darstellung von vorgegebenen Bahnen zur Ablage von Fasern durch eine der Vorrichtungen gemäß Fig. 1 oder Fig. 8;
**Fig. 12** eine Reihe von durch die Vorrichtung gemäß Fig. 1 abgelegten Faserbandstücken
**Fig. 13** eine schematische Darstellung einer mit einer der Vorrichtungen gemäß Fig. 1 oder Fig. 8 herstellbaren Preform;

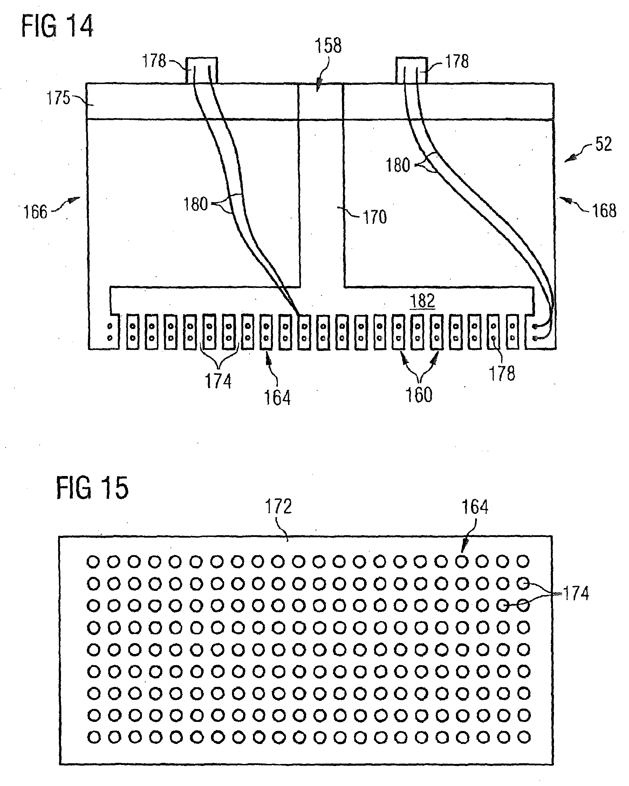

**Fig. 14** eine schematische Querschnittsansicht durch einen bei der Legevorrichtung von Fig. 8 oder Fig. 1 verwendbaren Legekopf;
**Fig. 15** eine Unteransicht auf den Legekopf von Fig. 14 und;

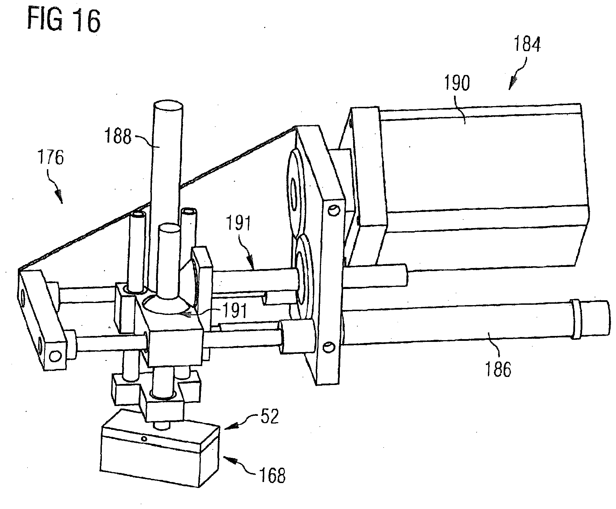

**Fig. 16** eine detailliertere schematische perspektivische Darstellung der Legevorrichtung aus Fig. 8.

In Fig. 1 ist eine insgesamt mit 10 bezeichnete Preform-Herstellvorrichtung in der Übersicht dargestellt. Mit dieser Preform-Herstellvorrichtung lässt sich ein kompliziertes textiles Halbzeug mit kraftflussgerecht verlaufenden Faserfilamenten zur Herstellung von Faserverbundstrukturen selbst bei kompliziertem Aufbau des Halbzeugs in einfacher Weise herstellen. Derartige textile Halbzeuge werden Preforms genannt. Die Herstellung dieser Preforms erfolgt in der Vorrichtung gemäß Fig. 1 aus mittels Bindermaterial fixierten einzelnen kurzen Faserstücken, die zuvor von einem speziell vorbearbeiteten Faserfilamentstrang oder Faserband abgeschnitten worden sind. Die Preform-Herstellvorrichtung lässt sich somit in einer Aufbereitungsgruppe 12 zur Aufbereitung des Faserbandes 14 und in eine Schneid- und Legegruppe 16 zum Abschneiden von Faserbandstücken und Verlegen derselben aufteilen. Mit einer strichpunktierten Linie ist die mögliche Trennung 15 zwischen diesen Gruppen 12 und 16 angedeutet.

Fig. 1 zeigt ein erstes Ausführungsbeispiel einer solchen Schneid- und Legegruppe 16; ein zweites Ausführungsbeispiel einer solchen Schneid- und Legegruppe 16 ist in Fig. 8 dargestellt.

Zunächst wird anhand der Fig. 1 der Gesamtaufbau sowie das Wirkungsprinzip der Preform-Herstellvorrichtung 10 erläutert, wonach dann anhand der weiteren Figuren deren einzelne Baugruppen erläutert werden.

Wie aus Fig. 1 ersichtlich, weist die Preform-Herstellvorrichtung 10 eine Abrollvorrichtung 18, eine Spreizvorrichtung 20, eine Bebinderungsvorrichtung 22, eine Schneidvorrichtung 24, eine Transporteinrichtung 26, eine Legevorrichtung 28 sowie ein Vorform 30 auf. Diese Einzelvorrichtungen 18, 20, 22, 24, 26, 28 und 30 sind jeweils für sich verkehrsfähig und auch ohne die jeweils anderen Vorrichtungen zum Erfüllen ihrer Einsatzzwecke verwendbar. Die hiesige Offenbarung um-fasst daher auch die jeweiligen Vorrichtungen 12, 16, 18, 20, 22, 24, 26, 28, 30 jeweils einzeln und alleine.

Die Abrollvorrichtung 18 dient zum Liefern eines Faserfilamentstranges, beispielsweise eines Rovings 32. Die Abrollvorrichtung 18 ist, wie dies im folgenden noch näher erläutert ist, derart ausgebildet, dass ein verdrehfreies Abrollen des Rovings 32 ermöglicht ist. Zum Herstellen von kohlefaserverstärkten (CFK) Bauteilen wird bei dem dargestellten Ausführungsbeispiel ein Kohlenstoff-Roving verwendet.

Die Spreizvorrichtung 20 dient zum möglichst breiten Aufspreizen der einzelnen Filamente des Rovings 32, um so ein möglichst flaches Faserband 14 aus möglichst wenigen Lagen nebeneinanderliegender einzelner Filamente zur Verfügung zu stellen. Hierzu weist die Spreizvorrichtung 20, wie dies nachfolgend noch näher erläutert wird, eine Spreizeinrichtung 34 und eine Lockerungseinrichtung 36 auf.

Die Bebinderungsvorrichtung 22 dient dazu, Filamente des Faserbandes 14 und/oder einzelne Faserbandstücke davon mit einem Bindermaterial 38 zu versehen, das zum Fixieren der Faserbandstücke in der Preform dient. In der in Fig. 1 dargestellten Ausführungsform ist die Bebinderungsvorrichtung 22 Teil der Aufbereitungsgruppe 12 und wird so zum Versehen des aufgespreizten Faserbandes 14 mit Bindermaterial 38 verwendet. In nicht dargestellten Ausführungsformen der Preform-Herstellvorrichtung 10 lässt sich zusätzlich oder alternativ eine Bebinderungsvorrichtung 22 der Schneid- und Legegruppe 16 zuordnen, um dann die bereits abgeschnittenen Faserstücke mit Bindermaterial 38 zu versehen.

Die Schneidvorrichtung 24 ist zum Abschneiden von Stücken definierter Länge von dem Faserband 14 (Faserstücke) ausgebildet. Die einzelnen Faserbandstücke werden im folgenden als Patches 40, 40', 40" bezeichnet.

Die Transporteinrichtung 26 dient zum Vereinzeln der Patches 40 und zum Transportieren derselben zu der Legevorrichtung 28.

Die Legevorrichtung 28 ist derart ausgebildet, dass sie einzelne Patche 40 erfassen kann und an vordefinierte Positionen, hier an der Vorform 30 platzieren können. Die Vorform 30 dient dazu, der Preform 42 eine vorgegebene dreidimensionale Flächengestaltung zu geben.

Die Preform-Herstellvorrichtung 10 weist weiter eine hier mehrere Steuerungen 44a, 44b aufweisende Steuerungsvorrichtung 44 auf, die die Einzelvorrichtungen 12, 18, 20, 22, 26, 30 derart steuert, dass nach Art einer Patchwork-Decke aus oder mit den einzelnen Patches 40 die Preform 42 gebildet wird.

Mit der Preform-Herstellvorrichtung 10 lässt sich somit folgendes Herstellverfahren zum Herstellen einer Preform 42 für eine kraftflussgerechte Faserverbundstruktur automatisch durchführen:
Zunächst wird ein in Form des Rovings 32 vorliegendes Faserfilamentbündel gespreizt und mit dem in dem vorliegenden Ausführungsbeispiel thermisch aktivierbaren Bindermaterial 38 versehen. Das so zur Verfügung gestellte bebinderte Faserband 14 wird anschließend in die Stücke definierter Länge - Patches 40 - geschnitten. Die Patches 40 werden vereinzelt und zu der Legevorrichtung 28 transportiert. Die Legevorrichtung 28 platziert jedes Patch 40 an einer jeweils vordefinierten Position 46 an der Vorform 30 und presst das Patch 40 auf die Vorform 30 auf.

Mit der Preform-Herstellvorrichtung 10 lässt sich somit eine Fiber-Patch-Preforming-Technologie durchführen, die durch einen speziellen Legeprozess das positionsgenaue Aufbringen kurzer Faserstücke ermöglicht. Über die Orientierung und Anzahl der Faserstücke können die geforderten Eigenschaften der Preform 42 erfüllt werden. Dadurch können Fasern entlang definiert gekrümmter Bahnen orientiert werden; und der Fasergehalt kann lokal variieren.

Durch die Ablage gespreizter, kurz geschnittener Faserbandstücke - Patches 40 - können kraftflussoptimierte Preformen 42 hergestellt werden. Ein Faserschneidwerk 48 schneidet die speziell vorgefertigten, bebinderten Faserbänder 14 in kurze Stücke, und über übergibt diese an ein Vakuumfließband 50 der Transporteinrichtung 26.

Die Übergabe der Patches 40 von dem Vakuumfließband 50 an einen Legekopf 52 der Legevorrichtung 28 erfolgt fliegend über eine Kombination aus Ansaug-und Abblasmodulen. Der Legekopf 52 heizt den Patch 40 während des Transports zum Ablegeort auf und aktiviert dadurch das Bindematerial 38. Der Legekopf 52 presst den Patch 40 auf die vordefinierte Stelle und löst sich dann mit einem Abblasimpuls. Der Legekopf 52 kehrt danach in die Ausgangsposition zurück.

Diese Technologie erlaubt die vollautomatische Produktion von komplexen Faser-Preformen. Parameter wie Fasergehalt, Faserorientierung und Kurvenradien können weitgehend variiert werden.

In den hier dargestellten Ausführungsformen werden zum Herstellen der Preformen 42 gespreizte Kohlenstofffasern anstatt textiler Halbzeuge verwendet. Die Länge der Fasern ist sehr kurz (wenige Zentimeter) im Vergleich zu vorkonfektionierten Gelegen, die Langfasern verwenden. Durch eine spezielle Positionierung der Kurzfasern - in den Patches 40 - können ähnlich hohe mechanische Kennwerte wie bei Langfaserverbunden erreicht werden.

Die Kurzfasern können relativ exakt entlang komplexer Kraftflusspfade gelegt werden. Bei zuvor zum Herstellen von solchen Preformen eingesetzten textilen Zuschnitten können nur Vorzugsorientierungen eingestellt werden. Dadurch können mit der hier dargestellten Technologie extreme geometrische Formen dargestellt werden. Das Herstellverfahren ist vollautomatisiert und es können Dickenvariationen innerhalb einer Preform und/oder veränderte Faservolumengehalte erhalten werden.

In dem in Fig. 1 dargestellten Ausführungsbeispiel der Preform-Herstellvorrichtung 10 wird in der Schneid- und Legegruppe 16 als Faserschneidwerk 48 ein Laser 54 verwendet, der prozessorgesteuert exakt relativ zu dem Faserband 14 bewegbar ist. Weiter ist in Fig. 1 als Legemechanik 184 zur Bewegung des Legekopfes 52 ein Roboterarm angedeutet. Die Vorform 30 ist exakt und definiert relativ hierzu bewegbar und drehbar, um verschiedene komplexe 3D-Strukturen von Preformen 42 einfach erzeugen zu können.

Zusammenfassend ist ein Grundgedanke der hier vorgestellten Ausführungsform der Fiber-Patch-Preforming-Technologie, Kohlenstofffaser-Rovings 32 möglichst breit aufzuspreizen, mit Binderpulver zu beschichten und mit einer neuen Schneidtechnik in definiert lange Stücke, sogenannte Patches 40, zu schneiden. Diese Patches 40 werden dann von der speziellen Legevorrichtung 28 aufgenommen, an eine vordefinierte Position platziert und mittels dem Bindermaterial 38 fixiert. Damit sind verschiedenste Bauteilgeometrien und Faserarchitekturen erzeugbar.

Bei dem hier dargestellten Herstellprozess werden gespreizte Fasern eingesetzt. Eine Faserspreizung bildet eine Grundlage dafür, lokale Ansammlungen von Faserenden innerhalb des späteren Verbundwerkstoffs zu vermeiden, da diese Spannungskonzentrationen verursachen und schlimmstenfalls zum Bauteilversagen führen könnten. Durch eine Spreizung reduziert sich die Dicke des Rovings 32. Damit können mehr durchgängige Fasern in den Einflussbereich eines Faserende gelangen und Spannungsspitzen kompensieren. Des Weiteren wird bei überlappenden Ablegen die Stufe am Schnittende eines Rovings 32 reduziert. Eine solche Stufe könnte bei einem ungespreizten Roving bis zu 250µm hoch sein und würde zur Auslenkung der darüber liegenden Kohlenstofffaser aus der Kraftflussrichtung führen. Zusätzlich könnte dort eine harzreiche Zone entstehen, die sich negativ auf die Festigkeit des Materials auswirkt.

Um eine Spreizung möglichst wirksam durchzuführen, sollten Verdrehungen des Roving 32 vermieden werden, da querlaufende Filamente einen gespreizten Roving wieder einschnüren könnten. Die Spannung innerhalb des Roving 32 sollte im gespreiztem Zustand konstant sein, da durch Spannungsunterschiede die Spreizbreite und Spreizqualität beeinflusst werden könnte.

Die Abrollvorrichtung 18, die im Folgenden anhand der Fig. 2 näher erläutert wird, dient dazu, einen Roving 32 von einer Vorratsspule 56 ohne Verdrehung anliefern zu können und die Pendelbewegung des Rovings 32 beim Abzug von der Vorratsspule 56 auszugleichen. Die Abrollvorrichtung 18 weist hierzu eine bewegliche Lagerung 58 der Vorratsspule 56 derart auf, dass sich die Vorratsspule 56 entsprechend der Lage des gerade abzurollenden Bereiches des Roving 32 nachbewegt, so dass die Abrollposition möglichst konstant bleibt.

Hierzu weist die Lagerung 58 einen entlang einer Linearführung 60 gelagerten Schlitten 62 auf. Der Schlitten 62 ist mittels Schrittmotoren und in dem hier dargestellten Beispiel mittels einer Antriebsspindel in Richtung der Drehachse der Vorratsspule 56 bewegbar. Die Bewegung des Schlittens 62 wird von einem Motor 66 mit integrierter Steuerung angetrieben. Ein Sensor 68 beobachtet die aktuelle Position 70 des Rohlings 32 und steuert damit die Drehbewegung des Motors 66.

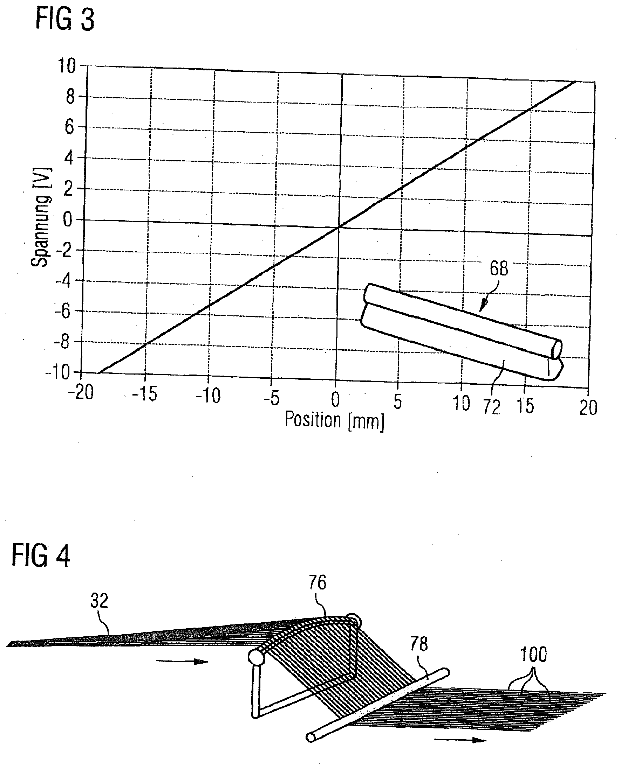

Als Sensor 68 dient hierzu eine ortsauflösende Fotodiode 72, die in Fig. 3 zusammen mit ihrer Kennlinie dargestellt ist. Eine Diodenzeile der Fotodiode 72 registriert den Schatten des Roving 32 und gibt die Position über eine Verstärkerschaltung (nicht explizit dargestellt) als Analogsignal aus. Der Mittelpunkt eines Schattens entspricht ortsabhängig einen bestimmten Spannungswert. Das Analogsignal wird als bipolares Spannungssignal an die Steuerung des Motors 66 übergeben, wobei 0 Volt der Sensormitte entspricht. Zusätzlich wird der Sensor 68 mit einem IR-LED-Scheinwerfer bei einer bestimmten Frequenz, beispielsweise 10 KHz, angeblitzt, um eine Beeinflussung des Messsignals durch Umgebungslicht zu verhindern. Dieser Sensor 68 ist auf die speziellen Anforderungen einer die Lage des Roving 32 auf der Vorratsspule 56 kompensierenden Abrollungen optimiert und erlaubt noch weiterer Einstellungen, wie zum Beispiel Mittelpunktverschiebung und Biegeanpassung. Die Kombination aus ortsauflösender Fotodiode 72 und gesteuertem Servomotor 66 hat den Vorteil, dass die Gegenbewegung in Abhängigkeit der aktuellen Bewegungsgeschwindigkeit des Rovings 32 ausgelöst wird. Bei langsamen Abzugsgeschwindigkeiten werden relativ langsame Kompensationsbewegungen ausgelöst, während hohe Abzugsgeschwindigkeiten entsprechend schnelle Gegenbewegungen auslösen. Dadurch wird der Roving 32 weitgehend schwingungsfrei als flaches Bändchen 74 abgerollt. Am Ende der Abrollvorrichtung 18 umläuft der Roving 32 in einer S-förmigen Bewegung zwei Röllchen 75, hier: zwei taillierte Edelstahlröllchen, die zusätzlich letzte Schwingungen beruhigen. Die Abrollvorrichtung 18 lässt sich anders in Fig. 1 dargestellt auch vollkommen autonom von den übrigen Baugruppen betreiben und benötigt im Grunde nur eine Energieversorgung, beispielsweise einen Stromanschluss.

Der Roving 32 durchläuft im Anschluss an die Abrollvorrichtung 18 eine Spreizstrecke in der Spreizvorrichtung 20.

Die Spreizvorrichtung 20 weist, wie oben bereits erwähnt, zunächst die Spreizeinrichtung 34 auf, die genauer in Fig. 5 dargestellt ist und deren Wirkungsprinzip zunächst anhand der Fig. 4 erläutert wird.

Fig. 4 zeigt eine Prinzipskizze eines bereits aus der DE 715801 A bekannten alten mechanischen Spreizprinzips. Hier durchläuft ein Faserstrang 14 nacheinander eine gebogene Stange 76 und dann eine gerade Stange 78. Die Kombination aus einer geraden und einer gebogenen Stange sorgt bei in Fig. 4 dargestellten, grundsätzlich bekannten Radiusspreizern dafür, dass die auf die Faser wirkende Zugkraft umgeleitet wird. Es wirkt nun auch eine Kraft, die die Faser auf die gebogene Stange presst. An der höchsten Stelle der Auslenkung wirkt auf die Filamente die höchste Kraft. Mit zunehmender Entfernung von dieser Stelle wird die Kraft geringer. Das heißt, Filamente können der Belastung ausweichen, wenn sie auf der gebogenen Stange nach außen wandern. Dabei hängt es jedoch von der Zugkraft auf die Faser, der Reibung zwischen Faser und Stange, der Position der Stangen zueinander und von der Biegung der Stange ab, wie das Spreizergebnis aussieht. Bei einer extremen Biegung ist die Differenz der wirkenden Kräfte zwischen der höchsten Stelle und einer Außenposition so groß, dass die Oberflächenreibung der Stange keine Rolle mehr spielt. Die Filamente werden schlagartig nach außen wandern, d. h. der Roving 32 würde abrutschen oder sich spalten. Ist die Biegung zu gering, dann fällt das Spreizverhältnis zu niedrig aus.

Aufgrund dessen ist der in Fig. 4 dargestellte Radiusspreizer für die industrielle Bearbeitung von Rovings 32 zur Aufbereitung für die Preform-Herstellung in industriellem Maßstab nicht geeignet. Insbesondere würden Fehler im Roving 32, wie zum Beispiel Verdrehungen, Spalte oder Faltungen zum Abrutschen oder zum Spalten im gespreizten Material führen.

Die in Fig. 5 dargestellte Spreizeinrichtung 34 löst Probleme mit der Materialqualität von Rovings oder von sonstigen aufzuspreizenden Faserfilamentbündeln, indem der Roving 32 bzw. das Faserfilamentbündel immer wieder neu auf wenigstens eine konvex gebogene Spreizkante aufgesetzt wird. Hierzu weist die Spreizeinrichtung 34 wenigstens eine konvex gebogene Spreizkante 80 auf, die sich mit wenigstens einer Richtungskomponente senkrecht zur Längserstreckung des Rovings 32 oder des sonstigen Faserfilamentbündels relativ zu diesem so bewegt, dass dieses auf die konvex gebogene Spreizkante 80 unter Spannung aufgelegt wird und sich anschließend wieder mit wenigstens einer Richtungskomponente senkrecht von dem Roving 32 oder dem Faserfilamentbündel wegbewegt, so dass sich dieses von der Spreizkante 80 löst.

Die wenigstens eine Spreizkante 80 ist in praktischer Ausgestaltung an einem radialen Vorsprung 82 an einer Drehwelle 84 ausgebildet.

Bei der bevorzugten Ausgestaltung gemäß dem in Fig. 5 dargestellten Ausführungsbeispiel sind wenigstens zwei Kanten, von denen wenigstens eine als konvex gebogene Spreizkante 80 ausgebildet ist, von entgegengesetzten Richtungen auf den Roving 32 bzw. das Faserfilamentbündel zu bewegbar. Bei dem Ausführungsbeispiel sind hierzu zwei Drehwellen 84, 86 mit radialen Vorsprüngen 82 vorgesehen, wobei sich die Drehwellen 84, 86 gegenläufig zueinander drehen.

Neben ersten radialen Vorsprüngen 82, an denen konvex gebogene Spreizkanten 80 ausgebildet sind, sind in bevorzugter Ausgestaltung auch noch zweite radiale Vorsprünge 88 vorgesehen, welche mit geradlinigen Kanten 90 auslaufen. Dadurch ist eine Spreizvorrichtung geschaffen, bei der sich wenigstens eine konvex gebogene Spreizkante 80 und wenigstens eine geradlinige Kante 90 von entgegengesetzten Richtungen aus auf das Roving 32 oder das Filamentbündel zu bewegen können, bis der Roving 32 bzw. das Filamentbündel ähnlich der in Fig. 4 dargestellten Weise zwischen den Kanten 80, 90 gespreizt wird. Die Kanten 80, 90 sind auch zur Entlastung des Rovings 32 bzw. des Faserfilamentbündels wieder in entgegengesetzter Richtung zurückführbar.

Besonders einfach ist dies bei der Ausgestaltung gemäß Fig. 5 dadurch realisiert, dass an den gegenläufig, hier mittels eines Zahnradgetriebes 92, angetriebenen Drehwellen 84, 86 mehrere, die radialen Vorsprünge 82, 88 bildende Flügel 94 ausgestaltet sind, die sich im Wesentlichen in axialer Richtung erstrecken und an deren radial äußersten Bereiche die Kanten 80 oder 90 ausgebildet sind. Dabei folgt auf einen Flügel 94 mit der geradlinigen Kante 90 in Umfangsrichtung ein Flügel mit der konvex radial nach außen gebogenen Spreizkante 80 und daraufhin wieder ein Flügel 94 mit geradliniger Kante 90 u.s.w.

In einer anderen Ausgestaltung sind die Kanten sämtlicher Flügel 94 als konvex radial nach außen gebogene Spreizkanten 80 ausgestaltet. Durch die Anordnung an sich gegenläufig bewegenden Bewegungsorganen, bei dem Ausführungsbeispiel die beiden Drehwellen 84, 86, werden die Fasern jeweils zwischen zwei gegenläufig gebogenen Spreizkanten 80 aufgespreizt.

Auf diese Art und Weise ist die Spreizeinrichtung 34 sozusagen als Flügelspreizer ausgebildet, der für eine immer wieder erneute Auflage des Rovings 32 auf Spreizkanten 80 sorgt. Zusätzlich wird eine Schlichte auf dem Roving 32 oder dem Faserfilamentbündel durch die wechselseitige Biegung aufgebrochen, und die Filamente 100 können sich unabhängig voneinander bewegen.

In der Spreizvorrichtung 20 folgt auf die als Flügelspreizer ausgebildete Spreizeinrichtung 34 in Förderrichtung des Rovings 32 weiter die Lockerungseinrichtung 36, die in der hier vorgestellten Ausgestaltung als Saugkammer nach dem sogenannten Fukui-Prinzip ausgestaltet ist. Die Saugkammer 96 kann von der Art sein, wie sie in der US-A-6 032 342 beschrieben ist. Der aufgelockerte und vorgespreizte Roving 32 wird dabei von einem starken laminaren Luftstrom 98 in die Saugkammer 96 gezogen. Die einzelnen Filamente 100 werden von Luft umströmt und können relativ leicht übereinander gleiten. Des Weiteren kann die Saugkammer 96 leichte Schwankungen in der Spannung des Rovings 32 ausgleichen.

Bei der Herstellung von Kunststofffasern werden die Filamentbündel oftmals frei geführt und durch Ösen geleitet. Dabei können sich Teile der Filamente 100 um den Rest des Bündels drehen und zu Rovingeinschnürungen schon bei der Herstellung führen. Nach dem Aufwickeln auf eine Roving-Spule sind diese Fehler zunächst kaum sichtbar, da das Filamentbündel flach aufgezogen wird. Nach der Auflockerung der Filamentbündel in der Spreizeinrichtung 34 sind querlaufende Rovingteile jedoch deutlich sichtbar. Dieser Effekt kann zu Lücken und Verschiebungen im Roving 32 führen, die die Spreizqualität negativ beeinflussen.

Um ein möglichst homogenes Spreizbild zu erreichen, wird bei einer nicht expliziten dargestellten Ausführungsform der Erfindung eine mehrstufige Spreizung vorgesehen, bei der das Spreizverhältnis stufenweise gesteigert wird. Hierzu ist zunächst eine erste Spreizeinrichtung 34 und eine erste Lockerungseinrichtung 36 zum Spreizen des Rovings 32 auf ein erstes Breitenmaß, beispielsweise auf einen Wert zwischen 8 und 16 mm, vorgesehen. Danach folgt eine weitere Stufe mit einer weiteren Spreizeinrichtung 34 und einer weiteren Lockerungseinrichtung 36 mit größeren Abmaßen als die ersten Spreizeinrichtung und die erste Lockerungseinrichtung, um so eine Spreizung auf eine größere Breite, beispielsweise einen Wert zwischen 20 und 35 mm durchzuführen.

Danach liegt der Roving 32 als breites dünnes Band, das Faserband 14, vor.

Im weiteren Verlauf wird dieses Faserband 14 noch mit einer geringen Menge des Bindermaterials 38 ausgerüstet.

Theoretisch liegen bei einem perfekt gespreizten, 30 mm breiten 12k-Roving nur noch drei Filamente übereinander. Dabei wurde ein Durchmesser der Filamente 100 von 7µm und eine höchste Packungsdichte angenommen. In der Realität weist ein Roving 32 jedoch immer Spreizfehler auf, die stellenweise zu dickeren Bereich und damit zu einer höheren Anzahl von Filamentenden führen können.

Das Versehen des so aufgespreizten Rovings 32 mit Bindermaterial 38 wird in der in Fig. 7 vom Prinzip her dargestellten Bebinderungsvorrichtung 22 durchgeführt. Die Bebinderungsvorrichtung 22 ist vom Grundprinzip her nach Form eines Pulverstreuers ausgebildet, wie er beispielsweise in der US-A-3 518 810, der US-A-2 489 846, der US-A-2 394 657, der US-A-2 057 538 oder der US-A-2 613 633 beschrieben ist. Er hat demnach einen Trichter 102, an dessen Ausgang eine mit radialen Erhebungen 104 versehene Walze 106 vorbeiläuft.

Die Walze 106 ist in dem dargestellten Ausführungsbeispiel eine gerändelte

Stahlwalze, die mit ihrer rauen Oberfläche den Pulvertransport übernimmt. Diese Walze 106 wird ihrerseits von einer Ausbürstwalze 108 bearbeitet, die das pulverförmige Bindermaterial 38 von der Walze 106 entfernt und auf das darunter vorbeilaufenden Faserband 14 streut.

Zwischen dem Faserband 14 und dem Auftragmechanismus kann eine Spannung U angelegt sein, so dass sich das Pulver, wie bei einer Pulverlackbeschichtung, elektrostatisch an das Faserband 14 anlegt.

Die Transport-Walze 106 sowie die Ausbürstwalze 108 sind durch zwei getrennte Elektromotoren 110 und 112 angetrieben, um die Streuparameter möglichst frei einstellen zu können. Die Steuerung erfolgt über eine Steuereinrichtung 114, die Teil der Steuerungsvorrichtung 44 sein kann.

Um zu vermeiden, dass das Pulver an Engstellen blockieren und Maschinenteile verklemmen kann, ist der Trichter 102 nicht am Rest der Bebinderungsvorrichtung 22 fest fixiert, sondern an einem Halter 116 gehalten, der Ausgleichsbewegungen zulässt. Ein Vorteil des Halters 116 ist dabei, dass der Trichter 102 im laufenden Betrieb schwingen kann und das Pulver automatisch nach unten gerüttelt wird. Das Pulver wird in genau dosierbarer Menge auf die Oberfläche des darunter mit einer definierten Geschwindigkeit, beispielsweise im Bereich von 3 bis 6 m/sec, durchlaufenden Rovings 32 aufgestreut. Überschüssiges Pulver fällt am Roving 32 vorbei in einem Auffangbehälter (nicht dargestellt) und kann später wieder in den Prozess eingeführt werden.

Messungen haben gezeigt, dass die aufgestreute Menge an Bindermaterial nahezu linear zu der Drehgeschwindigkeit der Walze 106 abhängt.

Die Bebinderungsvorrichtung 22 weist weiter noch eine Heizeinrichtung 118 auf, um die Pulverpartikel des bei Heiztemperaturen schmelzenden Bindermaterials 38 an die Oberfläche der Filamente 100 zu fixieren.

Bei der dargestellten Ausführungsform weist die Heizeinrichtung 118 eine ca. 100 bis 500 mm lange Heizstrecke auf. Die bevorzugte Ausgestaltung der Heizeinrichtung 118 ist mit Heizstrahlern, hier mit Infrarot-Heizstrahlern 120 ausgestattet. Die Heizleistung der Heizeinrichtung 118 kann durch die Steuereinrichtung 114 genau eingestellt werden.

Die Binderpartikel werden leicht angeschmolzen und binden sich an die Faseroberfläche.

Danach kann - wie dies in Fig. 1 a angedeutet ist - das fertige Faserband 14 auf eine spezielle Filmspule 121 aufgerollt werden und für eine spätere Verwendung zwischengelagert werden.

Bei dem in Fig. 1 dargestellten Ausführungsbeispiel wird das so speziell vorgefertigte Faserband 14 der Schneidvorrichtung zugeführt, wo es in die Patches 40, 40'. 40" aufgeteilt wird und anschließend mittels der Legevorrichtung 28 verlegt wird.

Fig. 1a zeigt eine Ausführung mit getrennten Gruppen 12, 16 unter Verwendung der Filmspulen 121 als Beispiel für eine Zwischenlagerung. Die Gruppen 12, 16 könnten so auch an getrennten Produktionsstandorten stehen.

In Fig. 8 ist eine zweite Ausführungsform der Schneid- und Legegruppe 16 näher dargestellt. Bei dieser Ausgestaltung gemäß Fig. 8 weist die Schneidvorrichtung 24 ein Faserschneidwerk 122 mit einer Messereinrichtung 124 und einer Gegenwalze 126 sowie mit wenigstens einer oder, wie hier dargestellt, mehreren Förderwalzen 128 auf.

Die Messereinrichtung 124 lässt sich abhängig von der Drehgeschwindigkeit der Gegenwalze 126 und/oder der Förderwalzen 128 zum Abschneiden von Patchen 40 mit definierter Länge betätigen.

Insbesondere weist die Messereinrichtung 124 einen (nicht näher dargestellten) Kupplungsmechanismus auf, der einen Antrieb der Messereinrichtung 124 mit einem Antrieb für die Walzen 126, 128 kuppelt.

Die Messereinrichtung 124 ist in dem dargestellten Beispiel mit einer Messerwalze 130 versehen, die als radialer Vorsprung wenigstens eine, hier mehrere Messerkanten 132 aufweist. Die Messerwalze 130 ist bei dem dargestellten Ausführungsbeispiel weiter durch die nicht näher dargestellte Kupplungseinrichtung so an den Antrieb der Gegenwalze 126 koppelbar, dass sich die Messerkanten 132 mit der gleichen Umfangsgeschwindigkeit wie die Oberfläche der Gegenwalze 126 bewegen.

Die in Fig. 8 und in größeren Einzelheiten in Fig. 9 dargestellte Schneidvorrichtung weist demnach ein Kupplungsschneidwerk 134 auf, bei dem zwei Paare von Förderwalzen 128 und eine gummierte Gegenwalze 126 mittels eines nicht näher dargestellten Motors über ein zentrales formschlüssiges Getriebe, beispielsweise über einen Zahnriemen (nicht dargestellt) angetrieben wird. Die Förderwalzen 128 ziehen ein Endlosfaserband - hier insbesondere das aufgespreizte Faserband 14 - ein und leiten es über die in gleicher Geschwindigkeit drehende Gegenwalze 126.

Über der Gegenwalze 126 steht ein Messerbalken 136 in Warteposition. Soll ein Schnitt ausgeführt werden, kuppelt eine elektromagnetische Kupplung den Messerbalken 136 in die Schneidwerksbewegung ein. Im Berührpunkt haben der Messerbalken 136 und die Gegenwalze 126 die gleiche Drehgeschwindigkeit. Das zu schneidende Material wird durch eine Messerklinge 138 gebrochen. Danach wird der Messerbalken 136 ausgekuppelt und mit einer Bremseinrichtung, beispielsweise mit einer elektromagnetischen Bremse - nicht dargestellt -, angehalten. Das zweite Paar Förderwalzen 128 transportiert die Zuschnitte ab.

Das Kupplungsschneidwerk 134 ermöglicht den verzugsfreien Zuschnitt gespreizter Faserbänder. Der Schnitttakt, bzw. die Schnittlänge kann dabei computergesteuert im laufenden Betrieb verändert werden.

Die Bremsvorrichtung (nicht explizit dargestellt) sorgt dafür, dass die Messerwalze 130 immer arretiert ist, wenn die Kupplung nicht eingeschaltet ist. Der Kupplungs- und Bremsvorgang läuft über ein gemeinsames Wechslerrelais (nicht dargestellt), daher sind die Störungen durch Programmfehler ausgeschlossen. Eine nicht weiter dargestellter Sensoreinrichtung, beispielsweise ein induktiver Näherungsschalter, registriert die Position der Messer und sorgt für eine Bremsung der Messer in waagerechter Position. Wird von der angeschlossenen Steuerung, beispielsweise der Steuerungsvorrichtung 44, ein Schnittbefehl ausgelöst, kuppelt die Messerwalze 130 ein, beschleunigt und führt einen Schnitt aus. Wenn, wie bei dem Ausführungsbeispiel vorgesehen, die Messerwalze 130 in diesem Moment die gleiche Umfangsgeschwindigkeit hat wie die Gegenwalze 126, wird die Messerklinge 138 nicht verbogen, und es ergibt sich eine wesentlich längere Messerstandzeit, vergleichbar einem einfachen Stoßmesser. Nach dem Schnittvorgang wird die Messerwalze 130 ausgekuppelt und an der gleichen Position wie zu Beginn abgebremst und gehalten. Die Schnittlänge wird in einer Steuerungssoftware programmiert.

Fig. 10 zeigt den schematischen Ablauf der Schneidwerksteuerung. Wie aus Fig. 10 ersichtlich, wird abhängig von der Vorschubgeschwindigkeit des Schneidwerks der Schnitttakt vorgegeben. Die minimale Schnittlänge ergibt sich aufgrund der Dimensionen von Messerwalze 130 und Gegenwalze 126 und liegt beispielsweise in der Größenordnung der Breite des aufgespreizten Faserbandes 14. Die maximale Schnittlänge ist theoretisch unbegrenzt.

Bei beiden hier vorgestellten Ausführungsformen der Schneid- und Legegruppe 16 werden die Patches 40, 40', 40" nach der Schneidvorrichtung 24 an die Transporteinrichtung 26 weitergegeben, die die Patches 40, 40', 40" mit einer größeren Transportgeschwindigkeit als die Fördergeschwindigkeit des Faserbandes 14 zu der oder in der Schneidvorrichtung 24 von der Schneidvorrichtung 24 weg transportiert. Hierdurch werden die Patches 40, 40', 40" vereinzelt und mit genügend großem Abstand zueinander versehen. Die Transporteinrichtung 26 ist mit einer Halteeinrichtung, die die Patches 40, 40', 40" an der Transporteinrichtung festhält, und mit einer Übergabeeinrichtung versehen, die die Patches 40, 40', 40" an den Legekopf 52 der Legevorrichtung 28 übergibt.

Die Festhalteeinrichtung und die Übergabeeinrichtung sind hier in Form des Vakuumfließbandes 50 realisiert. Eine großvolumige Saugkammer 140 verteilt die Saugleistung einer nicht näher dargestellten Unterdruckquelle, beispielsweise eine Sauggebläses, über die gesamte Transporteinrichtung 26. Ein mit vielen durchgängigen Rohren versehenes Band, beispielsweise ein Polypropylenband, wird über ein die Saugkammer 140 bedeckendes Lochblech 142 geführt.

Die Transporteinrichtung 26 wird durch eine Ankopplung an eine Fördereinheit der Schneidvorrichtung 24 angetrieben. In dem hier dargestellten Beispiel ist das Vakuumfließband 50 an das formschlüssige Getriebe, welches die Förderwalzen 128 und die Gegenwalze 126 antreibt, gekoppelt. Dabei sorgt ein entsprechendes Übersetzungsverhältnis, beispielsweise ein Übersetzungsverhältnis von 1 zu 2, für einen genügend großen Abstand zwischen den Patches 40, 40', 40". Am Ende der Transportstrecke liegt eine Saug-Abblaskammer 144, die mit einem pneumatischen Vakuummodul betrieben wird. Solange ein Faserstück - Patch 40 - über die Saug-Abblaskammer 144 geführt wird, befindet sich diese im Saugbetrieb. Wenn der Legestempel an einer vorgegebenen Übergabeposition 146 steht, wird im richtigen Moment ein Abblasimpuls ausgelöst, der den Patch 40 auf den Legekopf 52 befördert.

Der Legekopf 52 saugt den Patch 40 an, heizt ihn auf und transportiert ihn mit vorbestimmter Orientierung an seine vorbestimmte Position.

Dabei werden, wie dies in Fig. 11 dargestellt ist, die Patches 40, 40', 40" entlang vorbestimmter gekrümmter Bahnen 148 auf der Vorform 30 abgelegt. Bei 150 sind entlang dieser gekrümmter Bahnen 148 mit entsprechender Orientierung verlegte Patches und deren Überlappung angedeutet. In den Überlappungsbereichen werden die Patches 40 durch das durch den Legekopf 52 erwärmte Bindermaterial 38 aneinander fixiert.

Mit der in Fig. 1 dargestellten Schneidvorrichtung unter Verwendung des Lasers 54 (oder eines sonstigen Strahlschneidverfahrens) lassen sich aber auch kompliziertere Schneidkantenformen erzeugen. In Fig. 12 ist eine besonders vorteilhafte Schneidkantenform mit komplementär zueinander konvex bzw. konkav gekrümmten Schneidkanten 152, 154 dargestellt. Die entgegengesetzt gerichteten Schneidkanten 152, 154 an jedem Patch 40 sind kreisbogenförmig gekrümmt. Dadurch lassen sich die Schneidkanten 152, 154 hintereinanderliegender Patches 40, 40', 40" auch bei Abwinkelung der Patche 40, 40', 40" zueinander ganz eng nebeneinanderliegen, ohne dass Lücken oder Aufdickungen entstehen. Auf diese Weise können mit einer gleichbleibenden dichten Anlage von Faserstücken auch engere Krümmungsradien der Bahnen 148 mit entsprechenden Faserorientierungen belegt werden. Die Fixierung der Patches 40, 40', 40" kann durch Überlappung mit benachbarten oder darüber liegenden oder darunter liegenden Patches (nicht dargestellt) erfolgen.

Auf diese Art und Weise lassen sich auch sehr komplizierte Preforms 42 darstellen, wie sie beispielsweise in Fig. 13 angedeutet sind. Hier ist nach Art eines Patchworks mit den kurzen Faserstücken eine Preform 192 für eine kraftflussgerechte Faserverbundstruktur für einen Fenstertrichter, beispielsweise für einen Rumpf eines Luft- oder Raumfahrtgerätes, ausgebildet. Die Patches 40, 40', 40" sind entsprechend der Kraftflusslinien orientiert.

Die dargestellte Ringform lässt sich prozesstechnik beispielsweise durch eine definiert drehbare Vorform 30 erreichen, wie dies durch die Pfeile 156 in Fig. 1 dargestellt ist.

Anhand der Fig. 14 - 16 wird nun noch die Legevorrichtung 28 und deren Legekopf 52 der in Fig. 8 näher dargestellten Ausführungsform der Schneid- und Legegruppe 16 weiter erläutert.

Der Legekopf 52 soll die Funktion erfüllen, ein Faserstück oder Patch 40, 40', 40" aufzunehmen und zu der jeweils nächsten vorbestimmten Position 46 an der Vorform 30, wo ein Patch 40, 40', 40" verlegt werden soll, zu transportieren. Für diesen Zweck hat der Legekopf 52 eine Festhaltevorrichtung. Wenngleich auch andere Festhaltevorrichtungen denkbar sind, so ist in dem hier dargestellten Beispiel zwecks einfacher Aufnahme des Patches von der Transporteinrichtung 26 die Festhalteeinrichtung als Saugeinrichtung 158 ausgebildet.

Weiter ist es vorteilhaft, wenn das Bindermaterial 38, mit dem der aufgenommene Patch 40 versehen ist, während des Transports mit dem Legekopf 52 aktiviert wird.

Hierfür weist der Legekopf 52 eine Aktivierungsvorrichtung zum Aktivieren des Bindermaterials 38 auf. Die Aktivierungsvorrichtung ist je nach verwendetem Bindermaterial ausgebildet. Wird z. B. ein durch ein Additiv aktivierbares Bindermaterial verwendet, dann weist der Legekopf eine Einrichtung zur Zugabe dieses Additivs auf. In einer anderen, hier nicht näher dargestellten Ausgestaltung wird gleich aktives Bindermaterial, wie beispielsweise ein Klebstoff, erst während des Transports des Patches am Legekopf zugeführt. Bei einer solchen Ausgestaltung weist der Legekopf eine Einrichtung zur Zugabe des Bindermaterials auf. Zur Verwendung in der zuvor erläuterten Preform-Herstellvorrichtung 10, die thermisch aktivierbares Bindermaterial 38 verwendet, ist die Aktivierungseinrichtung bei der dargestellten Ausführungsform als Heizeinrichtung 160 ausgebildet.

Weiter ist es vorteilhaft, wenn der Legekopf 152 das Patch 40, 40', 40" sicher auch an kompliziertere dreidimensionale Flächengestaltungen der Vorform 30 anbringen kann. Hierzu ist der Legekopf 52 mit einer Presseinrichtung 162 versehen, die zum Anpressen des transportierten Patches 40 an unterschiedliche Flächengestaltungen geeignet ist. Die Presseinrichtung 162 weist in bevorzugter Ausgestaltung eine flexible Oberfläche 164, an der das Patch 40 mittels der Festhalteeinrichtung festgehalten werden kann, auf. Die flexible Oberfläche 164 ist weiter bevorzugt an einem elastischen Trägerelement 166 ausgebildet.

Fig. 14 zeigt einen Querschnitt durch einen Legestempel 168 des Legekopfs 52, welcher die Festhalteeinrichtung, die Aktivierungseinrichtung und die Presseinrichtung vereinigt. Der in Fig. 14 dargestellte Legestempel 168 weist somit die Saugeinrichtung 158, die Heizeinrichtung 160 sowie die Presseinrichtung 162 mit der flexiblen Oberfläche 164 an dem elastischen Trägerelement 166 auf.

Fig. 15 zeigt eine Unteransicht auf die flexible Oberfläche 164.

Mit dem Legestempel 168 können bei der Fiber-Patch-Preforming Technologie (FPP) bebinderte und in definierte Geometrien geschnittene Faserstücke (Patches) entsprechend eines Legeplan (beispielsweise des in Fig. 11 wiedergegebenen Legeplans) positionsgenau abgelegt werden. Der Legestempel 168 ist eine zentrale Komponente der Ablegetechnik und kann auch in anderen geometrischen Variationen verwendet werden. Es sind z. B. quaderförmige oder rollenförmige Legestempel denkbar.

Bei dem konkreten Ausführungsbeispiel gemäß Fig. 14 ist der Legestempel 168 als Silikonstempel ausgebildet. Die Oberflächenanpassung des Silikonstempels ähnelt der Tampon-Drucktechnik. Jedoch erfolgt hier die entsprechende Anwendung auf einen technologisch völlig verschiedenem Gebiet.

Der Legestempel 168 ist in der Lage, Faserzuschnitte über eine integrierte Ansaugung - Saugeinrichtung 158 - schnell und schonend aufzunehmen und an einem definierten Ablageort zu transportieren. Während des Transports heizt eine in die Kontaktfläche - flexible Oberfläche 164 - integrierte Heizung - Heizeinrichtung 160 - das Material auf und aktiviert dadurch ein Bindemittel - Bindermaterial 38 -auf dem Faserzuschnitt. Der Faserzuschnitt wird auf die Oberfläche gepresst, wobei sich das weiche Stempelmaterial der Oberflächengeometrie anpasst. Wenn sich der Legestempel 168 von der Oberfläche entfernt, wird ein Abblasimpuls ausgelöst, das Bindermaterial 38 gekühlt, und das Fasermaterial verbleibt am Ablageort.

Der Legestempel 168 ermöglicht die Herstellung von Fiber-Patch-Preformen 42.

In der Fig. 14 ist das elastische Trägerelement 166 - elastischer Druckkörper - mit einer Luftverteilung 170 dargestellt, die Teil der Saugeinrichtung 158 ist. Der nicht dargestellte Teil der Saugeinrichtung 158 ist mit üblichen Pneumatikquellen und pneumatischen Steuerungen (nicht dargestellt) versehen. Weiter ist die flexible Oberfläche 164 als elastische Heizfläche 172 mit Ansaug- und Abblaskanälen 174 dargestellt.

Das elastische Trägerelement 166 sitzt auf einer Kupplungsplatte 4, die mit lösbaren Befestigungselementen (nicht dargestellt) zur Befestigung des Legestempels 168 an einer Positioniereinrichtung 176 (siehe Fig. 16) versehen ist.

Weiter ist ein Thermoelement 178 als Steuerungsteil der Heizeinrichtung 160 vorgesehen. Eine hochflexible Stromleitung 180 verbindet das Thermoelement 178 mit der elastischen Heizfläche 172.

In Fig. 15 ist die Saugfläche - flexible Oberfläche 164 - mit den Ansaug- und Abblaskanälen 174 dargestellt.

Im Folgenden wird die Anwendung des Legestempels 168 sowie weitere Details der Legevorrichtung 28 anhand deren Verwendung in der Preform-Herstellvorrichtung 10 näher erläutert.

Bei der hier vorgestellten Fiber-Patch-Preforming-Technologie werden einzelne Faserpatches 40 zu einer dreidimensionalen Preform 42, 192 angeordnet. Hierzu setzt eine geeignete Legetechnik den Aufbauplan in die Realität um. Die Legevorrichtung 28 übernimmt die bebinderten und geschnittenen Faserpatches 40 vom Vakuumfließband 50, das der Schneidvorrichtung 24 zugeordnet ist, und platziert die Faserpatches 40 in möglichst schnellem Takt auf eine Oberfläche. In dem dargestellten Ausführungsbeispiel werden die Faserpatches 40, 40', 40" auf eine Oberfläche der Vorform 30 abgelegt.

Dabei sollen die Patches 40, 40', 40" zur Bildung einer stabilen Preform 42 auf die formgebende Oberfläche gepresst werden. Der Legestempel 168 soll dabei möglichst weich sein, um sich mit gleichmäßiger Kraft einer dreidimensionalen Oberfläche anpassen zu können. Weiter ist für die hier dargestellte Ausgestaltung vorteilhaft, dass kurz vor dem Ablegen eine bestimmte Wärmemenge zur Aktivierung des Bindermaterials 38 zur Verfügung gestellt werden kann. Hierfür ist die flexible Oberfläche 164 mit der Heizeinrichtung 160 ausgestattet, die die mechanischen Eigenschaften des Stempelmaterials möglichst wenig beeinflusst. Ähnlich wie bei dem Vakuumfließband 50 ist auch beim Legestempel 168 eine flächige Fixierung der filigranen Faserpatches 40 vorteilhaft. Hierfür hat die flexible Oberfläche 164 auch eine Ansaugfunktion.

Die Herstellung des Legestempels 168 lehnt sich an die Herstellung von Tampon-Druckstempel aus der Drucktechnik an. Für die Herstellung von Tampon-Druckstempel existieren eine Reihe von Spezialsilikonen, die den andauernden mechanischen Wechselbelastungen lange Zeit widerstehen können. Aus diesen Silikonen wird dasjenige Silikon ausgewählt, das den zusätzlichen Anforderungen, aufgrund der Heizeinrichtung 160 sowie des Kontakts mit Bindermaterial 38 möglichst gut entsprechen. Beispielsweise ist das Silikon M 4615, welches von der Fa. Wacker auf dem Markt erhältlich ist, geeignet, da es eine sehr hohe Reißfestigkeit besitzt und mit hohen Weichmacheranteilen versetzt werden kann. Da in den Legestempel 168 eine Heizung integriert wird, wurden Versuche zur Temperaturstabilität des Stempelmaterials gemacht. Es ist dabei vorteilhaft, wenn der Legestempel 168 Dauertemperaturen bis zu 200°C ertragen kann. Konventionelle Weichmacher auf Silikonölbasis neigen dabei zur erhöhter Diffusion und können aus dem Silikonstempel austreten. Dieses Problem kann durch Weichmacher gelöst werden, die zumindest teilweise in das Silikon einvernetzt werden. Ein solcher Weichmacher ist beispielsweise der von der Fa. Wacker auf dem Markt angebotene Weichmacher MH20.

Um die Ablegefläche des Legestempels 168 beheizen zu können, sind verschiedene Heizeinrichtungen 160 einsetzbar. Es kommen z. B. elektrische Heizungen, Flüssigkeitskreisläufe oder Heißluft in Frage. Fertigungstechnisch am einfachsten ist die Variante einer elektrischen Heizeinrichtung 160 umzusetzen. Dies bietet gleichzeitig die Möglichkeit sehr hoher Heizleistungen mit exakter Temperatureinstellung.

Um die Flexibilität des elastischen Trägerelements 166 nicht zu beeinflussen, sind die Stromleitungen 180 vorteilhafterweise mittels eines Kohlenstoffasergarns gebildet. Die hohe Flexibilität eines solchen Garns führt nicht zu einer Versteifung der flexiblen Oberfläche 164. Weiter hält eine solche Faser auch mehrere 100.000 Lastzyklen aus.

Die Wärmeleitfähigkeit des elastischen Trägerelements 166 lässt sich durch Beimischung von Metallanteilen in das Silikon steigern. Hierzu ist beispielsweise Aluminiumpulver oder ein Pulver eines sonstigen Leichtmetalls geeignet.

Bei einem Pulveranteil von ca. 10-25 Gewichtsprozent, insbesondere ca. 20 Gewichtsprozent besitzt die flexible Oberfläche 164 eine ausreichende Wärmeleitfähigkeit, so dass ein Heizelement der Heizeinrichtung 160 und die flexible Oberfläche 164 auf annähernd gleicher Temperatur gehalten werden können.

Bei steigender Pulvermenge kann jedoch die Flexibilität des Legestempels 168 eingeschränkt werden. Wird die Pulvermenge weiter erhöht, könnte es zu elektrischen Durchschlägen kommen. Daher ist der vorgenannte Gewichtsprozentanteil am meisten bevorzugt.

In die flexible Oberfläche 164 des Legestempels 168 wurden die Ansaug- und Abblaskanäle 174 integriert, die im Inneren des Legestempels 168 über eine Kammer 182 zusammenführen. In der Kammer 182 ist ein Saugvlies (nicht dargestellt) eingelegt, welches ein Kollabieren beim Aufdrücken des Legestempels 168 verhindert.

Zur Vermeidung von elektrostatischen Aufladungen ist es vorteilhaft, wenn die flexible Oberfläche 164 aus einem flexiblen Material mit antistatischen Eigenschaften gebildet ist. Beispielsweise ist die flexible Oberfläche durch ein antistatisches Silikon gebildet. Das elastische Trägerelement 166 ist somit aus dem vorerwähnten Silikon mit guten elastischen Eigenschaften gebildet, während die flexible Oberfläche 164 aus einem antistatischen Silikon gebildet ist. Ein Beispiel für ein solches antistatisches Silikon ist das auf dem Markt unter der Bezeichnung Elastosil RT402 erhältliche Silikon.

Im Folgenden wird noch anhand der Fig. 16 die Ablegemechanik der Legevorrichtung 28 näher erläutert.

Die in Fig. 16 wiedergegebene Legemechanik 184 dient zur Bewegung des Legestempels 168, um Faserpatches 40 von der Schneidvorrichtung 24 zur vordefinierten Position 46 zu transportieren. Die Legemechanik 184 erlaubt einen schnellen Legetakt und einen einstellbaren Ablegewinkel.

Wie zuvor erläutert, wird der Patch 40 berührungslos vom Vakuumfließband 50 auf den Legestempel 168 übergeben. Dazu löst die Steuerungsvorrichtung 44 nach einer eingestellten Verzögerungszeit in Abhängigkeit eines Schnittbefehls einen Abblasimpuls der Saug/Abblaskammer 144 des Vakuumfließbandes 50 aus. Der Patch 40 wird über einen wenige Millimeter (ca. 0,5 - 10 mm) Luftweg auf den saugenden Legestempel 168 übertragen. Danach beginnt der Bewegungsablauf der Legemechanik 184.

Die Legemechanik 184 weist einen ersten translatorischen Antrieb zum Transport des Legestempels 168 von der Aufnahmeposition zu einer Position oberhalb der vorgegebenen Position auf. Dieser erste Antrieb ist bei der dargestellten Ausführungsform der Legemechanik 184 als waagerechter Pneumatikzylinder 186 ausgeführt. Dieser waagerechte Pneumatikzylinder 186 kann den Legestempel 168 von seiner Aufnahmeposition über die Ablegestelle verschieben. Ein zweiter Antrieb, hier in Form eines senkrechten Pneumatikzylinders 188, presst den Legestempel 168, vorzugsweise mit einstellbarem Druck, auf die Oberfläche.

Während des Verschiebevorganges wird die Stempelfläche permanent auf einer einstellbaren Temperatur gehalten, damit der Binder seine Klebrigkeit aktivieren kann. Sobald der Patch 40 die Oberfläche berührt, kühlt das Bindermaterial 38 ab und wird fest. Gesteuert von der Steuerungsvorrichtung 44 wird dann ein Abblasimpuls in der Saugeinrichtung 158 des Legestempels 168 ausgelöst; der Legestempel löst sich hierdurch und fährt anschließend zurück in seine Ausgangsposition. Dabei sind die trennenden Eigenschaften des Silikons von Vorteil, weil kein Bindermaterial 38 am Stempel verbleibt.

Über einen dritten Antrieb, der bei dem Ausführungsbeispiel in Form eines Schrittmotors 190 mit Keilwellensystem 191 ausgebildet ist, kann der Legestempel 168 gedreht werden. Somit können auch Spuren aus schrägen Patches 40 erzeugt werden, ohne dass der gesamte Legekopf (z. B. Legestempel 168 mit Legemechanik 184) gedreht werden muss.

Um einen wirtschaftlichen Legeprozess zu erreichen, wurde eine sehr hohe Taktrate von mehr als zwei Legevorgängen pro Sekunde geplant. Beispielsweise werden fünf Legevorgänge pro Sekunde oder mehr durchgeführt. Bei einer Patchlänge von 60 mm und unter Verwendung eines 12k-Rovings, kommt man so zu einem theoretischen Faserdurchsatz von 14,4 gr/min. Möchte man beispielsweise einen Quadratmeter mit Faserpatches 40 in der Dicke eines Biaxialgeleges (ca. 500gr/qm) belegen, so würde die Preform-Herstellvorrichtung 10 dafür ca. 35 Minuten benötigen. Kürzere Zeiten können durch Verwendung von mehreren Legevorrichtungen 28, beispielsweise von Verwendung von mehreren Robotern, erreicht werden, die gemeinsam an einer Oberfläche arbeiten.

Aufgrund der derzeit noch relativ niedrigen erreichbaren Geschwindigkeiten ist die FPP-Technik in der derzeit vorgestellten Form insbesondere für die Verstärkung anderer Preform-Typen sowie für dünnwandige und komplexe Bauteile geeignet.

So ist z. B. an die Verstärkung von Lochrändern auf Mulitaxialgelegen oder Geweben zu denken. Ein Fenstertrichter, dessen Preform 192 in Fig. 13 dargestellt ist, würde sich ebenfalls sehr dünnwandig und mit definierter Faserlage herstellen lassen.

Für bestimmt Preformtypen werden weniger Freiheitsgrade an einer FPP-Anlage - Preform-Herstellvorrichtung 10 - benötigt. Sollen z. B. nur Verstärkungsprofile hergestellt werden, dann können die einzelnen Baugruppen vereinfacht und zur einer Produktionslinie zusammengefasst werden. Nicht verwendete Baugruppen können weggelassen werden, oder die Vorrichtung kann in mehrere Baueinheiten unter Zwischenlagerung des Halbzeugmaterials getrennt werden.

Dadurch können sowohl die Anlagenkosten gesenkt werden, als auch die Produktivität erhöht werden.

### Bezugszeichenliste

- 10: Preform-Herstellvorrichtung
- 12: Aufbereitungsgruppe
- 14: Faserstrang
- 16: Schneid- und Legegruppe
- 18: Abrollvorrichtung
- 20: Spreizvorrichtung
- 22: Bebinderungsvorrichtung
- 24: Schneidvorrichtung
- 26: Transporteinrichtung
- 28: Legevorrichtung
- 30: Vorform
- 32: Roving
- 34: Spreizeinrichtung
- 36: Lockerungseinrichtung
- 38: Bindermaterial
- 40, 40', 40": Patch (Abschnitte von einem Faserband; Faserbandstücke)
- 42: Preform
- 44: Steuerungsvorrichtung
- 46: vordefinierte Position
- 48: Faserschneidwerk
- 50: Vakuumfließband
- 52: Legekopf
- 54: Laser
- 56: Vorratsspule
- 58: Lagerung
- 60: Linearführung
- 62: Schlitten
- 64: Antriebsspindel
- 66: Motor
- 68: Sensor
- 70: Position
- 72: Fotodiode
- 74: flaches Bändchen
- 75: Röllchen
- 76: gebogene Stange
- 78: gerade Stange
- 80: Spreizkante
- 82: erster radialer Vorsprung
- 84: Drehwelle
- 86: Drehwelle
- 88: zweiter radialer Vorsprung
- 90: geradlinige Kante
- 92: Zahnradgetriebe
- 94: Flügel
- 96: Saugkammer
- 98: laminarer Luftstrom
- 100: Filamente
- 102: Trichter
- 104: radiale Erhebungen
- 106: Walze
- 108: Ausbürstwalze
- 110: Elektromotor
- 112: Elektromotor
- 114: Steuereinrichtung
- 116: Halter
- 118: Heizeinrichtung
- 120: IR-Heizstrahler
- 122: Faserschneidwerk
- 124: Messereinrichtung
- 126: Gegenwalze
- 128: Förderwalze
- 130: Messerwalze
- 132: Messerkanten
- 134: Kupplungsschneidwerk
- 136: Messerbalken
- 138: Messerklinge
- 140: Saugkammer
- 142: Lochblech
- 144: Saug/Abblaskammer
- 146: Übergabeposition
- 148: gekrümmte Bahnen
- 150: überlappende Patches
- 152: Schneidkante
- 154: Schneidkante
- 156: Bewegbarkeit der Vorform - mehrdimensional -
- 158: Saugeinrichtung
- 160: Heizeinrichtung
- 162: Presseinrichtung
- 164: flexible Oberfläche
- 166: elastisches Trägerelement
- 168: Legestempel
- 170: Luftverteilung
- 172: elastische Heizfläche
- 174: Ansaug- und Abblaskanäle
- 175: Kupplungsplatte
- 176: Positioniereinrichtung
- 178: Thermoelement
- 180: Stromleitung
- 182: Kammer
- 184: Legemechanik
- 186: waagerechter Pneumatikzylinder (erster Antrieb)
- 188: senkrechter Pneumatikzylinder (zweiter Antrieb)
- 190: Schrittmotor (dritter Antrieb)
- 191: Keilwellensystem
- 192: Fenstertrichterpreform

## Patentansprüche

1. Legestempel (168) zur Verwendung in einer Legevorrichtung (28) zum Verlegen von Faserstücken (40, 40', 40"), die eine elastisch verformbare Oberfläche (164) zum flächigen Anpressen der Faserstücke (40, 40', 40") an eine gekrümmte Formfläche (30) umfasst, wobei der Legestempel (168) zum Verlegen von Faserstücken (40, 40', 40") umfasst
eine flexible, elastisch verformbare Oberfläche (164),
eine Festhaltevorrichtung (158) zum Festhalten eines Faserstückes (40, 40', 40") an der elastisch verformbaren Oberfläche (164)
und ein elastisches Trägerelement,
wobei die elastisch verformbare Oberfläche (164) an dem elastischen Trägerelement (166) ausgebildet ist,
**dadurch gekennzeichnet,**
**dass** die elastisch verformbare Oberfläche (164) als elastische Heizfläche (172) zum Aktivieren eines Bindermaterials (38) an an der elastisch verformbaren Oberfläche (164) anliegenden Faserstücken (40, 40', 40") kurz vor dem Ablegen der Faserstücke (40, 40', 40") mit integrierten Ansaug- und Abblaskanälen (174) ausgebildet ist.

2. Legestempel (168) nach Anspruch 1,
**dadurch gekennzeichnet, dass** die elastische Heizfläche (172) eine Heizeinrichtung (160) zum Aufwärmen eines an der elastisch verformbaren Oberfläche (164) anliegenden Faserstückes (40, 40', 40") aufweist, die als elektrische Heizeinrichtung ausgebildet ist, wobei wenigstens eine flexible Stromleitung (180) zum elektrischen Anschließen der Heizeinrichtung vorgesehen ist.

3. Legestempel (168) nach Anspruch 2,
**dadurch gekennzeichnet, dass** die wenigstens eine Stromleitung (180) wenigstens ein durch das Trägerelement (166) geführtes Kohlenstoffgarn aufweist.

4. Legestempel (168) nach einem der Ansprüche 1 bis 3,
**dadurch gekennzeichnet, dass** das elastische Trägerelement (166) einen Block aus einem Elastomer aufweist und/oder dass die elastisch verformbare Oberfläche (164) aus einem Elastomer gebildet ist.

5. Legestempel (168) nach Anspruch 4,
**dadurch gekennzeichnet, dass** das Elastomer aus oder mit Silikon gebildet ist.

6. Legestempel (168) nach Anspruch 5,
**dadurch gekennzeichnet, dass** das Silikon mit einem Weichmacher vernetzt ist.

7. Legestempel (168) nach einem der Ansprüche 1 bis 6,
**dadurch gekennzeichnet, dass** die elastisch verformbare Oberfläche (164) aus oder mit einem antistatischen Elastomer, insbesondere einem antistatischen Silikon, gebildet ist.

8. Legestempel (168) nach einem der Ansprüche 4 bis 7,
**dadurch gekennzeichnet, dass** das Elastomer eine Beimischung von Wärmeleitanteilen enthält.

9. Legestempel (168) nach einem der Ansprüche 4 bis 8,
**dadurch gekennzeichnet, dass** ein elektrisches Heizelement in das Elastomer der elastisch verformbaren Oberfläche eingebettet ist.

10. Legestempel (168) einem der Ansprüche 1 bis 9,
**dadurch gekennzeichnet, dass** das Trägerelement (166) mit wenigstens einem Kanal (170) für die Leitung eines Druckmediums zu der elastisch verformbaren Oberfläche (164) und/oder einem Verteilsystem zur Verteilung des Druckmediums über die Ansaug- und Abblaskanäle (174) versehen ist.

11. Legestempel (168) nach Anspruch 10,
**dadurch gekennzeichnet, dass** wenigstens ein Hohlraum (182) des Kanals und/oder des Verteilsystems mit einer gasdurchlässigen Stützstruktur, insbesondere unter Einsatz eines Saugvlieses, versehen ist.

12. Legevorrichtung (28) zum Verlegen von Faserstücken (40, 40', 40"), die eine elastisch verformbare Oberfläche (164) zum flächigen Anpressen der Faserstücke (40, 40', 40") an eine gekrümmte Formfläche (30)
**gekennzeichnet durch** einen Legestempel (168) nach einem der Ansprüche 1 bis 11, an dem die elastisch verformbare Oberfläche (164) ausgebildet ist, und eine Positioniereinrichtung (176) zur exakten Bewegung und Positionierung der elastisch verformbaren Oberfläche (164) zwischen wenigstens zwei vorbestimmten Positionen (46, 146), wobei die Positioniereinrichtung (176) zum Verdrehen oder Verschwenken der elastisch verformbaren Oberfläche (164) um eine flexible Oberfläche oder eine dazu parallele Ebene kreuzende Drehachse fähig ist.

13. Legevorrichtung (28) nach Anspruch 12,
**gekennzeichnet durch** eine Kupplungseinrichtung zum lösbaren Kuppeln des Legestempels (168) an die Positioniereinrichtung (176).

## Claims

1. Laying die (168) for use in a laying device (28) for laying fiber pieces (40, 40', 40"), the laying device including an elastically deformable surface (164) for pressing the fiber pieces (40, 40', 40") in a two-dimensional fashion against a curved forming surface (30), wherein the laying die (168) for laying fiber pieces (40, 40', 40") includes
a flexible, elastically deformable surface (164),
a holding device (158) for holding a fiber piece (40, 40', 40") against the elastically deformable surface (164),
and an elastic carrier,
wherein the elastically deformable surface (164) is formed on the elastic carrier (166),
**characterized in that**
the elastically deformable surface (164) is configured as an elastic heating surface (172) for activating a binder material (38) on fiber pieces (40, 40', 40") applied against the elastically deformable surface (164) just before depositing the fiber pieces (40, 40', 40") with integrated suction and blow-off channels (174).

2. Laying die (168) according to claim 1,
**characterized in that** the elastic heating surface (172) includes a heating device (160) for heating one of a fiber piece (40, 40', 40") applied against the elastically deformable surface (164) that is formed as an electrical heating device, wherein at least one flexible electric power line (180) is provided for electrically connecting the heating device.

3. Laying die (168) according to claim 2,
**characterized in that** the at least one electric power line (180) includes at least one carbon yarn passed through the carrier (166).

4. Laying die (168) according to one of the claims 1 to 3,
**characterized in that** the elastic carrier (166) includes a block of an elastomer and/or that the elastically deformable surface (164) is made from an elastomer.

5. Laying die (168) according to claim 4,
**characterized in that** the elastomer is made from or with a silicone.

6. Laying die (168) according to claim 5,
**characterized in that** the silicone is netted with a softener.

7. Laying die (168) according to one of the claims 1 to 6,
**characterized in that** the elastically deformable surface (164) is made from or with an antistatic elastomer, in particular antistatic silicone.

8. Laying die (168) according to one of the claims 4 to 7,
**characterized in that** the elastomer includes an admixture of heat conducting parts.

9. Laying die (168) according to one of the claims 4 to 8,
**characterized in that** an electric heating element is embedded in the elastomer of the elastically deformable surface.

10. Laying die (168) according to one of the claims 1 to 9,
**characterized in that** the carrier (166) is provided with at least one channel (170) for conducting a pressure medium to the elastically deformable surface (164) and/or with a distribution system for distributing the pressure medium over the suction and blow-off channels (174).

11. Laying die (168) according to claim 10,
**characterized in that** at least one cavity (182) of the channel and/or the distribution system is provided with a gas-permeable supporting structure, in particular using a suction fleece.

12. Laying device (28) for laying fiber pieces (40, 40', 40") including an elastically deformable surface (164) for pressing the fiber pieces (40, 40', 40") in a two-dimensional fashion against a curved forming surface (30), **characterized by** a laying die (168) according to one of the claims 1 to 11, on which the elastically deformable surface (164) is formed and a positioning device (176) for precisely moving and positioning of the elastically deformable surface (164) between at least two predetermined positions (46, 146), wherein the positioning device (176) is adapted for rotating or pivoting the elastically deformable surface (164) about a rotary shaft which intersects the flexible surface or intersects a plane that is parallel to this surface.

13. Laying device (28) according to claims 12,
**characterized by** a coupling device for the releasable coupling of the laying die (168) to the positioning device (176).

## Revendications

1. Tampon de pose (168) destiné à être utilisé dans un dispositif de pose (28) pour poser des tronçons de fibres (40, 40', 40"), qui comprend une surface élastiquement déformable (164) pour permettre le pressage surfacique des tronçons de fibres (40, 40', 40") sur une surface de mise en forme courbée (30), le tampon de pose (168) pour poser des tronçons de fibres (40, 40', 40") comprenant
une surface flexible élastiquement déformable (164),
un moyen de retenue (158) pour retenir un tronçon de fibres (40, 40', 40") sur la surface élastiquement déformable (164),
et un élément porteur élastique,
dans lequel la surface élastiquement déformable (164) est réalisée sur l'élément porteur élastique (166),
**caractérisé en ce que**
la surface élastiquement déformable (164) est réalisée sous forme de surface chauffante élastique (172) pour activer un matériau liant (38) sur des tronçons de fibres (40, 40', 40") en appui contre la surface élastiquement déformable (164) peu avant de poser les tronçons de fibres (40, 40', 40"), qui est munie de canaux d'aspiration et de soufflage (174) intégrés.

2. Tampon de pose (168) selon la revendication 1,
**caractérisé en ce que**
la surface chauffante élastique (172) comprend un moyen de chauffage (160) pour chauffer un tronçon de fibres (40, 40', 40") en appui contre la surface élastiquement déformable (164), qui est réalisé sous forme de moyen de chauffage électrique, et il est prévu au moins une ligne électrique flexible (180) pour brancher électriquement le moyen de chauffage.

3. Tampon de pose (100) selon la revendication 2,
**caractérisé en ce que**
ladite au moins une ligne électrique (180) comprend au moins un fil de carbone mené à travers l'élément porteur (166).

4. Tampon de pose (168) selon l'une des revendications 1 à 3,
caractérisé ce que l'élément porteur élastique (166) présente un bloc en un élastomère et/ou en ce que la surface élastiquement déformable (164) est formée en un élastomère.

5. Tampon de pose (168) selon la revendication 4,
**caractérisé en ce que** l'élastomère est formé en silicone ou avec de la silicone.

6. Tampon de pose (168) selon la revendication 5,
**caractérisé en ce que** la silicone est réticulée avec un plastifiant.

7. Tampon de pose (168) selon l'une des revendications 1 à 6,
**caractérisé en ce que** la surface élastiquement déformable (164) est formée d'un ou avec un élastomère antistatique, en particulier une silicone antistatique.

8. Tampon de pose (168) selon l'une des revendications 4 à 7,
**caractérisé en ce que** l'élastomère contient un ajout de parts thermiquement conductrices.

9. Tampon de pose (168) selon l'une des revendications 4 à 8,
**caractérisé en ce qu'**un élément de chauffage électrique est noyé dans l'élastomère de la surface élastiquement déformable.

10. Tampon de pose (168) selon l'une des revendications 1 à 9,
**caractérisé en ce que** l'élément porteur (166) est pourvu d'au moins un canal (170) pour amener un fluide sous pression vers la surface élastiquement déformable (164) et/ou vers un système de répartition pour répartir le fluide sous pression sur les canaux d'aspiration et de soufflage (174).

11. Tampon de pose (168) selon la revendication 10,
**caractérisé en ce qu'**au moins une cavité (182) du canal et/ou du système de répartition est pourvue d'une structure de soutien perméable aux gaz, en particulier en utilisant un non-tissé d'aspiration.

12. Dispositif de pose (28) pour poser des tronçons de fibres (40, 40', 40"), qui comprend une surface élastiquement déformable (164) pour permettre le pressage surfacique des tronçons de fibres (40, 40', 40") sur une surface de mise en forme courbée (30),
**caractérisé par**
un tampon de pose (168) selon l'une des revendications 1 à 11, sur lequel est réalisée la surface élastiquement déformable (164),
et un moyen de positionnement (176) pour le mouvement et le positionnement exacts de la surface élastiquement déformable (164) entre au moins deux positions prédéterminées (46, 146), le moyen de positionnement (176) étant capable de faire tourner ou pivoter la surface élastiquement déformable (164) autour d'un axe qui croise une surface flexible ou un plan parallèle à celle-ci.

13. Dispositif de pose (28) selon la revendication 12,
**caractérisé par** un moyen d'accouplement pour accoupler de façon détachable le tampon de pose (168) au moyen de positionnement (176).
